# EUROPEAN PATENT APPLICATION

(11) **EP 1 767 380 A2**
(43) Date of publication of application: **28.03.2007**
(21) Application number: 06016613.9
(22) Date of filing: 09.08.2006
(51) Int. Cl.: B42C 7/00

(54) **An article for the paper industry and bookbinding, in particular a book or diary cover of a simplified type**

(30) Priority: 08.09.2005 IT MI20051657
(71) Applicant: Fiscagomma S.p.A., 27029 Vigevano PV (IT)
(72) Inventor: Costamagna, Achille, 27029 Vigevano (PV) (IT)
(74) Representative: Petruzziello, Aldo

(57) **Abstract**

An article for the paper industry and for bookbinding, of the type comprising a support (3) of stiffening material and a padding (4) of foam material, wherein said foam material consists of a foam based on natural rubber latex and synthetic rubber latex, alone or in a mixture.

Compared with products of the prior art in the field, the article for the paper industry and for bookbinding according to the invention offers the advantage of having a simpler structure, due in particular to the lack of a need to provide a sheet of paper, with the specific purpose of retaining the glue for fixing of the outer covering of this article.

## Description

The present invention concerns an article for the paper industry and book binding, such as, for example, the cover of a book or diary having a simpler structure than that of similar products of the prior art.

The field of the invention is that of articles for the paper industry and for bookbinding, in particular the covers of books and diaries, produced with a sandwich or composite structure, formed in particular by a paper or cardboard shell or envelope, inside which is housed a padding of foam material. This shell is in turn covered with an outer covering consisting of a leather, imitation leather, fabric or cloth, or hide material or the like, which forms the part of the cover on view, destined to give the product a prized, high-quality appearance.

In particular the function of the padding of foam material is to make the cover soft to the touch, so as o make picking up and general handling of the book or diary comfortable.

Products of the aforementioned type of the prior art have the drawback that the foam material used to form this padding tends to absorb the glue that is normally used to fix said outer covering to the body of the cover. For this reason, the foam padding is traditionally covered, on the side thereof facing towards the outer covering, with a sheet of paper or card, which serves to receive the glue, without the absorption phenomena that might neutralize it.

The traditional need to have to use the above described sheet of paper or card holds many drawbacks.

First of all, the use of this auxiliary material increases costs, both for the processes necessary for production of the cover and for the end product.

Moreover the material itself, because of its nature, reduces the softness to the touch of the foam padding, thus defeating at least in part the function that this type of product is intended to fulfil.

The main object of the present invention is to provide a new article for the paper and book industry which, unlike the known embodiments, requires less complex processing and has a simpler structure than traditional embodiments in the sector, though offering the same properties of softness of the padding used.

Another object of the invention is to provide an article of the aforementioned type, which no longer makes it necessary to use the traditional intermediate sheet of paper, destined to receive the glue used to fix said outer covering to the body of the cover.

These and other objects are achieved with the article for the paper industry and for book binding according to claim 1. Preferred methods of realizing the invention are apparent for the remaining claims.

Compared with the known embodiments in the field, the article for the paper industry and bookbinding according to the invention offers the advantage of having a simpler structure, in particular because there is no need to provide a sheet of paper, with the specific function of retaining the glue for fixing of the outer covering of this article.

A further advantage of the invention is represented by the greater simplicity of the structure thus obtained, compared with that of traditional articles of the same type, using a less complex and costly procedure than those used hitherto.

These and other objects, characteristics and advantages will be apparent from the description that follows of a preferred method of producing the article for the paper industry and bookbinding according to the present invention illustrated, by way of non-limiting example, in the figures of the appended drawings, in which:
Figure 1 is a perspective view of a diary showing the cover side,
Figures 2 and 3 show a traditional cover for books and diaries, exploded and in section, respectively; and Figures 4 and 5 show a cover according to the invention, exploded and in section, respectively.

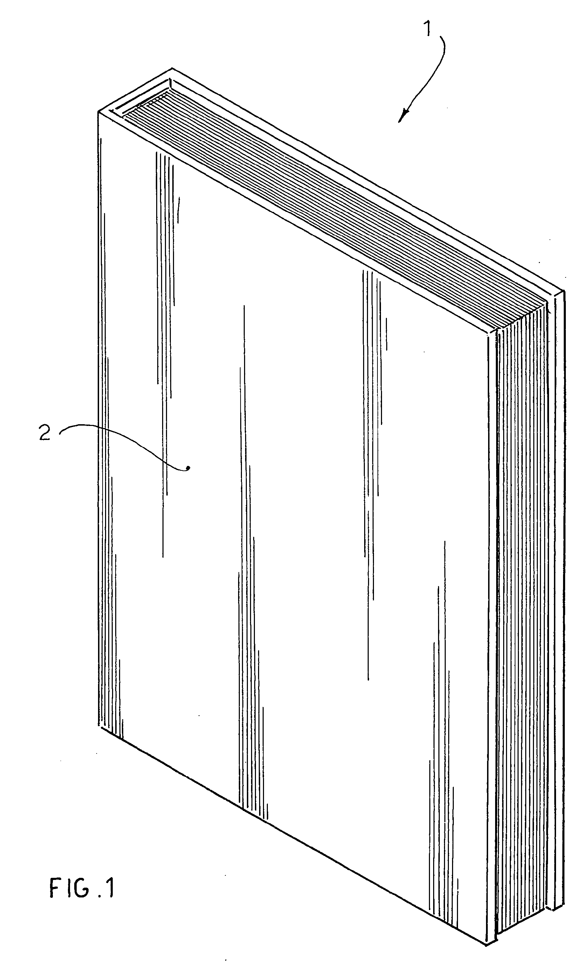

The diary illustrated in Figure 1 is indicated as a whole with 1, whereas reference numeral 2 indicates the detail of the cover.

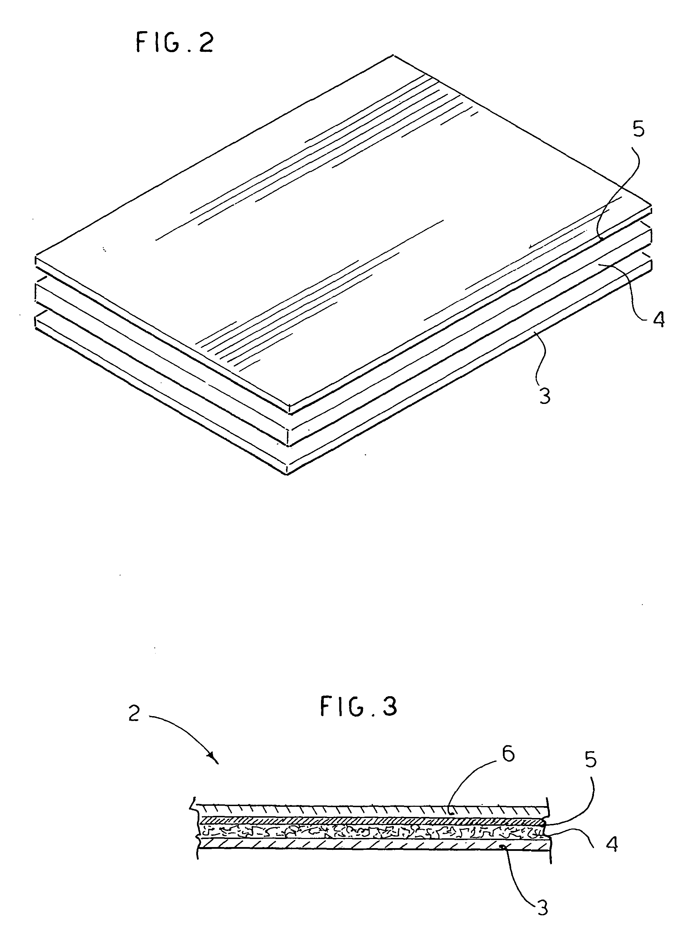

Traditionally the cover 2 has a composite structure, formed by a stiffening card 3, over which is placed a padding consisting of a thickness or a sheet of foam material 4, in turn covered with an outer covering 6 of imitation leather, hide, cloth or the like (Figure 3).

For the purpose of fixing said outer covering 6 to the cover 2, normally by gluing, an intermediate sheet 5 of paper or card, destined to receive the glue, is placed over the sheet of foam material 4. In this manner, fixing of the covering material 6 within the structure of the cover 2 is ensured, that is, avoiding possible neutralization of the adhesive effect of the glue by absorption thereof into the spongy structure of the foam material 4.

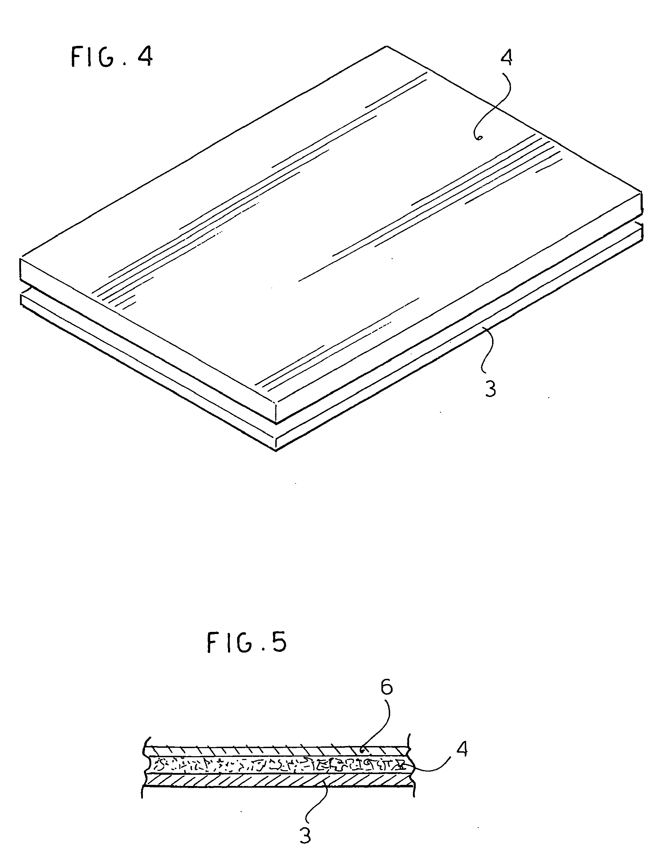

The corresponding article of the invention, illustrated in Figures 4 and 5, unlike the prior art described above, provides for the use of padding 4 made with foam material consisting of a foam based on natural rubber latex or synthetic rubber latex, in particular SBR, alone or mixed.

A synthetic rubber particularly suited to the aims of the invention is that possessing the following formulation:

| | |
|---|---|
| Rubber latex SBR (dry 67%) | 150 parts in weight |
| Soap (sodium sulfosuccinamate) | 8-12 " |
| ZnO green seal | 3-4 " |
| Sulphur | 2-2.5 " |
| ZDEC | 1-2 " |
| ZMBT | 100-150 " |
| Antioxidants | 0.6-0.8 " |
| K polyacrylate | 0.5-1.5 " |
| Pigment | 2-10 " |

where:
ZDEC: Zinc N-diethyldithiocarbamate;
ZMBT: zinc mercaptobenzothiazole;
SBR: Styrene-Butadiene-Rubber.

The thickness of the layer 4 of foam material padding is 1-15 mm, with a density of 100-500 g/l.

Thanks particularly to these density values, the foam material forming the padding 4 is able to receive the glue directly, without absorbing it, thus making it available for gluing of the outer covering 6. In this manner the traditional need to provide an intermediate sheet of paper, destined to allow gluing of the foam material that forms the padding of the cover, is overcome.

Although a specific formulation of latex has been indicated in the foregoing example ("nogel" foam formulation) it is also possible to use other formulations ("gel" system with sodium fluosilicate or with ammonium acetate), and/or other types of rubber latex (natural rubber latex alone, or cut with SBR latex), acrylic, vinyl, polyurethane, and acylonitrile resins, taken individually or mixed together.

Furthermore, although the example described and illustrated above is that of the cover of a diary, the invention applies to all possible articles for the paper or book industry, such as padded folders, document holders and the like.

## Claims

1. An article for the paper industry and for bookbinding, of the type comprising a support of stiffening material and a padding of foam material, **characterised in that** said foam material consists of a foam based on natural rubber latex and synthetic rubber latex, alone or mixed.

2. An article according to claim 1, **characterised in that** said rubber latex consists of a "gel" system with sodium fluosilicate or with ammonium acetate, and/or other types of rubber latex (natural rubber latex alone, or cut with SBR latex).

3. An article according to claim 1, **characterised in that** said foam material further comprises acrylic, vinyl, polyurethane, or acrylonitrile resins, taken individually or mixed together.

4. An article according to claims 1 or 2, **characterised in that** said latex foam has the following composition:
| | |
|---|---|
| Rubber latex SBR (dry 67%) | 150 parts in weight |
| Soap (sodium sulfosuccinamate) | 8-12 " |
| ZnO green seal | 3-4 " |
| Sulphur | 2-2.5 " |
| ZDEC | 1-2 " |
| ZMBT | 100-150 " |
| Antioxidants | 0.6-0.8 " |
| K polyacrylate | 0.5-1.5 " |
| Pigment | 2-10 " |
where:
ZDEC: Zinc N-diethyldithiocarbamate;
ZMBT: zinc mercaptobenzothiazole;
SBR: Styrene-Butadiene-Rubber.

5. An article according to one or more of claims 1 to 4, **characterised in that** said foam material has a density of 100-500 g/l.

6. An article according to claim 5, **characterised in that** said foam material has a thickness of 1-15 mm.

7. An article according to one or more of the preceding claims, **characterised in that** it consists of the padded cover of a book or a diary.

8. Use of a foam material consisting of a foam based on natural rubber latex and synthetic rubber latex, alone or mixed, to produce articles for the paper industry or for bookbinding.

9. Use of foam material consisting of a foam based on latex consisting of a "gel" system with sodium fluosilicate or with ammonium acetate and/or other types of rubber latex (natural rubber latex alone, or cut with SBR latex), for production of articles for the paper industry and for bookbinding.
